# EUROPEAN PATENT SPECIFICATION

(11) **EP 4 124 798 B1**
(45) Date of publication and mention of the grant of the patent: **03.07.2024**
(21) Application number: 22171537.8
(22) Date of filing: 04.05.2022
(51) Int. Cl.: F24C 3/14, A47J 37/07, A47J 37/06, A21B 1/52

(54) **PORTABLE OVEN**
TRAGBARER OFEN
FOUR PORTABLE

(30) Priority: 26.07.2021 GB 202110694
(43) Date of publication of application: 01.02.2023
(73) Proprietor: New Direction Tackle Ltd., Southampton SO15 1GA (GB)
(72) Inventor: Ferger, Benjamin, 35684 Dillenburg (DE)
(74) Representative: Forresters IP LLP

(56) References cited:
- CA-A1- 2 162 297
- CN-A- 103 082 879
- US-A- 1 711 226
- US-A- 3 812 839
- US-A1- 2014 007 860
- US-A1- 2021 095 852

## Description

### FIELD

The present invention relates to a portable oven, in particular a collapsible multifunctional oven.

### BACKGROUND

For campers, anglers and others who enjoy spending their free time outdoors doing recreational activities, it is important to have a way of preparing cooked food outdoors.

Typically, campers and anglers will use a traditional camping stove or a portable grill to prepare cooked food outdoors. A drawback to using a camping stove is that the user cannot bake or grill their food, which limits the range of food they are able to prepare. Similarly, a drawback to using a portable grill is that the user cannot bake or cook, e.g. fry or boil, their food, which again limits the range of food they are able to prepare. In order to be able to both grill and cook food outdoors, a camper or angler must carry both a stove and a grill. This is inconvenient because these items take up a lot of space.

US 3812839 discloses a foldable, portable camp stove. US 2014/007860 discloses a foldable portable roaster. CN 103082879 discloses a folding oven. CA 2162297 discloses a portable heating device. US 1711226 discloses a collapsible stove. US 2021/095852 discloses a collapsible and portable outdoor oven.

### BRIEF DESCRIPTION OF THE INVENTION

An aim of the present invention is to provide a portable oven suitable for use outdoors that can be collapsed down into a small folded state, allowing the oven to be more conveniently transported. Another aim of the present invention is to provide a multifunctional portable oven that can be used for cooking, baking and grilling food, thereby enabling the user to prepare a wide range of foods outdoors without needing to carry multiple different cooking devices.

A third aim of the present invention is to provide a multifunctional portable oven that can be used for multiple functions simultaneously. For example, the multifunctional portable oven may be used to both cook food and bake food simultaneously.

### REPRESENTATIVE FEATURES

These aims are achieved by a portable oven according to independent claim 1. Preferred embodiments are given in the dependent claims.

According to the present invention there is provided a portable oven comprising an upper anc a lower point of attachment for a gas burner, wherein the portable oven is foldable such that the portable oven can be moved between a folded state and an unfolded state.

According to the invention, the portable oven comprises:
a top portion;
a base plate;
a left and a right side panel; and
a back panel,

wherein the left and right side panels and the back panel are rotatably attached to the top portion,
wherein the base plate is attachable to and detachable from the back panel and the left and right side panels, and
wherein the portable oven is movable from the unfolded state to the folded state via detachment of the base plate from the back panel and the left and right side panels, and rotation of the back panel and the left and right side panels towards the top portion.

Conveniently, an underside of the base plate is configured to receive the top portion, the back panel, and the left and right side panels therein in the folded state.

According to the invention, the back panel comprises at least one flange on each of a left edge and a right edge thereof; the left and the right side panels each comprise at least one flange on a rear edge thereof; the flanges of the back panel support and stabilise the left and the right side panels in the unfolded state; and the at least one flange of each of the left and the right side panels supports and stabilises the back panel in the unfolded state.

Advantageously, the back panel comprises at least one projection on a lower edge thereof each of the left and the right side panels comprises at least one projection on a lower edge thereof; and the base plate comprises corresponding apertures in a top thereof for receiving the at least one projection of the back panel, the at least one projection of the left side panel, and the at least one projection of the right side panel therethrough.

Conveniently, each at least one projection of the left side panel and each at least one projection of the right side panel comprises a notch for receiving a portion of the base plate therein.

Preferably, at least one projection of the left side panel and at least one projection of the right side panel comprises a pin aperture therethrough; the base plate comprises corresponding pin apertures in a side thereof; in the unfolded state, each pin aperture of the left and right side panels aligns with one of the pin apertures in the base plate; the portable oven further comprises a plurality of pins; and, in the unfolded state, each pin aperture in the base plate and aligned pin aperture of the side panels receives one of the plurality of pins such that the left and right side panels are locked to the base plate.

Advantageously, the base plate comprises a sleeve holding a magnet adjacent each pir aperture in the base plate, each sleeve being attached to an inner surface of the base plate, and each pin being magnetic.

Conveniently, each magnet comprises a pin aperture therethrough, the pin aperture of each magnet being aligned with the adjacent pin aperture of the base plate; and, in the unfolded state, each pin aperture in the base plate, aligned pin aperture in the adjacent magnet, and aligned pin aperture in the side panels receives one of the plurality of pins such that the left and right side panels are locked to the base plate.

Preferably, each pin comprises a collar

**44-** Advantageously, the top portion comprises a detachable top plate

### BRIEF DESCRIPTION OF THE FIGURES

In order that the present disclosure may be more readily understood, preferable embodiments thereof will now be described, by way of example only, with reference to the accompanying drawings, in which:
FIGURE 1 is a perspective view of a portable oven according to the invention in the unfolded state.
FIGURE 2 is a side view of the portable oven of figure 1.
FIGURE 3 is a perspective view of a portable oven according to the invention in the unfolded state.
FIGURES 4A to 4C are perspective views of a back panel, a left side panel and a right side panel, respectively, of a portable oven according to the invention.
FIGURE 5 is a perspective view of a portable oven according to the invention in the folded state.
FIGURE 6 is a perspective view of a portable oven according to the invention in the folded state.
FIGURE 7 is a bottom view of a portable oven according to the invention in the unfolded state.

### DETAILED DESCRIPTION OF THE DISCLOSURE

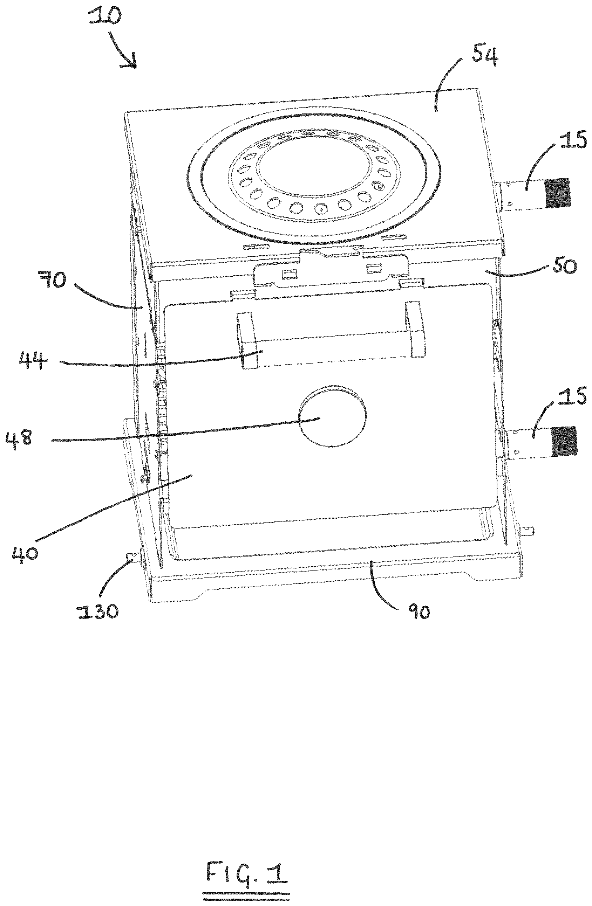

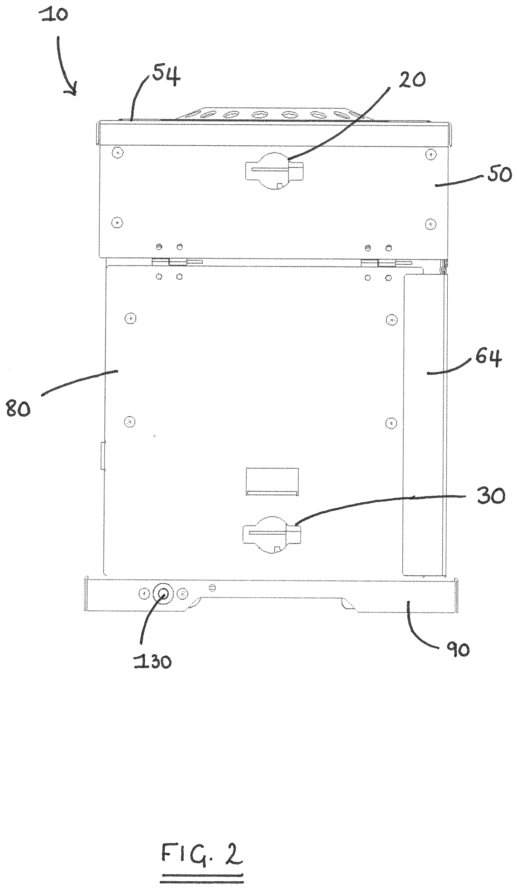

Figure 1 depicts a collapsible portable oven 10 according to the present invention in an unfolded state. As depicted, the portable oven 10 comprises two points of attachment for a gas burner 15: an upper and a lower point of attachment. The points of attachment 20, 30 can be seen more clearly in figure 2, which is a side view of the portable oven 10 of figure 1.

It can be appreciated that, although the points of attachment 20, 30 are depicted as both being on the same side of the portable oven 10 in the attached figures, the points of attachment 20, 30 may also be located one on each side of the portable oven 10.

It can be appreciated that the user may use the portable oven 10 with a single gas burner 15 attached to one of the points of attachment 20, 30 or with two gas burners 15: one attached to each point of attachment. The user may decide how many gas burners 15 to use and which point of attachment 20, 30 to use based on their cooking needs.

As depicted in figure 1, the portable oven 10 comprises a detachable door 40. The detachable door 40 comprises a handle 44, to allow the user to detach the door 40 from the portable oven 10. In preferred arrangements of the invention, the door 40 comprises a temperature indicator 48 for indicating the temperature within the oven chamber.

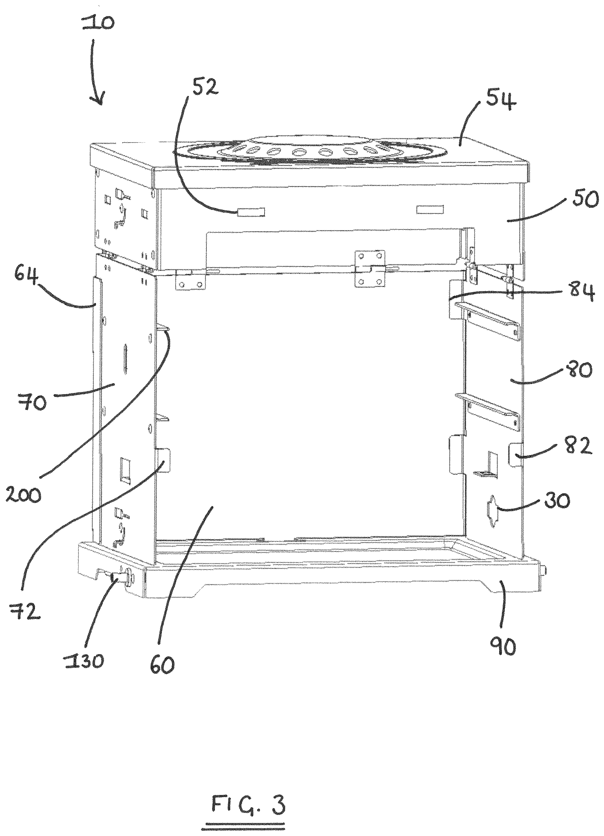

Figure 3 depicts an arrangement of a portable oven 10 according to the present invention with the door 40 detached. In the arrangement depicted in figure 3, the portable oven 10 comprises: a top portion 50; a back panel 60; left and right side panels 70, 80; and a base plate 90.

The upper point of attachment 20 is located in the top portion 50. The lower point of attachment 30 is located in one of the left and right side panels 70, 80.

In the depicted arrangement, the top portion 50 comprises at least one aperture 52 for attachment of the door 40. The door 40 may comprise a corresponding at least one hook for hooking through the at least one aperture 52. It can be appreciated that, in other arrangements of the invention not depicted, the door 40 and top portion 50 comprise alternative attachment means for attaching the door 40 to the portable oven 10.

The top portion 50 comprises a top plate 54. The top plate 54 may or may not be detachable from the remainder of the top portion 50. In the depicted arrangement, the top plate 54 functions as a hot plate for cooking food. In alternative arrangements of the invention, the top plate 54 functions as a plate for grilling food. In arrangements of the invention wherein the top plate 54 is detachable from the remainder of the top portion 50, the user may interchange the top plate 54, e.g. between a plate for grilling and a plate for cooking, depending on the type of food they wish to cook on the top plate 54. It can be appreciated that the portable oven 10 may be sold together with a plurality of interchangeable top plates 54.

As depicted in figure 3, the left and right side panels 70, 80 comprise at least one shelf 200 projecting from an inner surface thereof for supporting a wire rack or baking sheet. In the depicted arrangement, the left and right side panels 70, 80 each comprise two shelves 200. Accordingly, two wire racks or baking sheets, or a combination of the two can be placed inside the oven chamber: each wire rack or baking sheet being supported by a shelf 200 of the left side panel 70 and a shelf 200 of the right side panel 80. It can be appreciated that arrangements of the invention wherein the left and right side panels 70, 80 comprise multiple shelves 200 are advantageous, because multiple wire racks and/or baking sheets may be placed in the oven chamber, allowing the user to bake more food within the oven chamber simultaneously.

It can be appreciated that the portable oven 10 can be used to perform multiple functions. For example, food may be cooked or grilled on the top plate 54, and food may be grilled and/or baked within the oven chamber. It can also be appreciated that the portable oven 10 can be used to perform multiple functions simultaneously. For example, the user may cook food on the hot plate 54 at the same time as baking and/or grilling food in the oven chamber.

As also depicted in figure 3, the left and right side panels 70, 80 preferably comprise at least one flange 72, 82 on a front edge thereof. The flanges 72, 82 act as stops preventing the door 40, when attached to the oven 10, from swinging into the oven chamber.

As depicted in figure 3, the back panel 60 and the left and right side panels 70, 80 are rotatably attached to the top portion 50. In the preferred arrangement of the invention depicted, each of the back panel 60 and the left and right side panels 70, 80 are rotatably attached to the top portion 50 via at least one hinge. It can be appreciated that other means of rotatable attachment could be used for attaching the back panel 60 and the left and right side panels 70, 80 to the top portion 50.

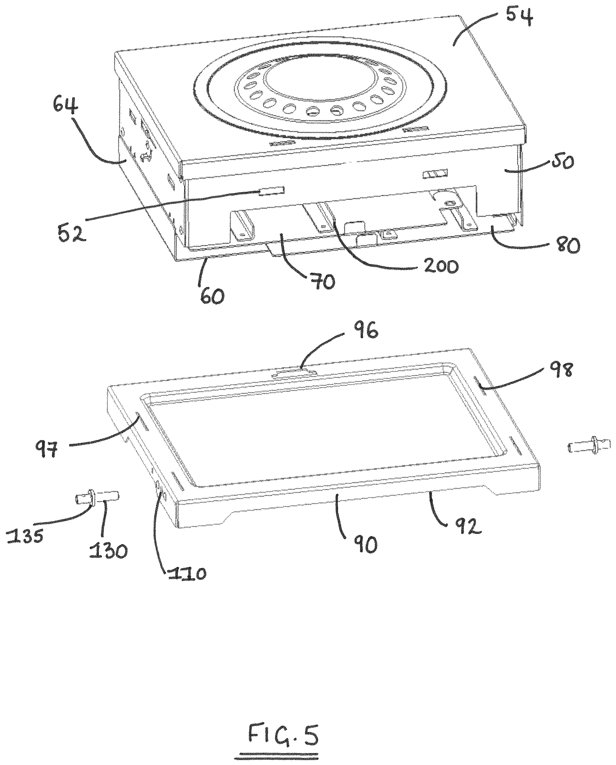

Figure 5 shows the portable oven 10 of figure 3 in the folded (i.e. collapsed state). To collapse the portable oven 10 into the folded state, the back panel 60 and left and right side panels 70, 80 are detached from the base plate 90. The left and right side panels 70, 80 and back panel 60 are then rotated towards the top portion 50.

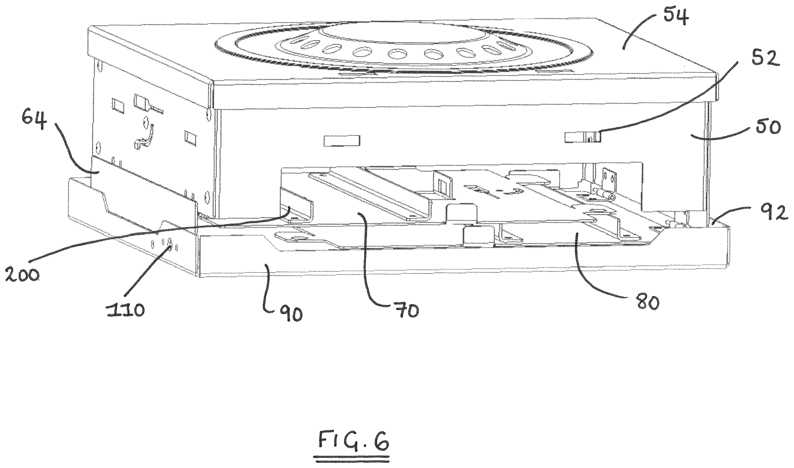

As can be seen in figure 6, in some arrangements of the invention, an underside 92 of the base plate 90 is configured to receive the top portion 50, back panel 60 and left and right side panels 70, 80 in the folded state. In such arrangements of the invention, the transport size of the portable oven 10 is further reduced.

In the depicted arrangement, to assemble the oven from the folded state, the user must first rotate the back panel 60 away from the top portion 50. The user can then rotate the left and right side panels 70, 80 away from the top portion 50.

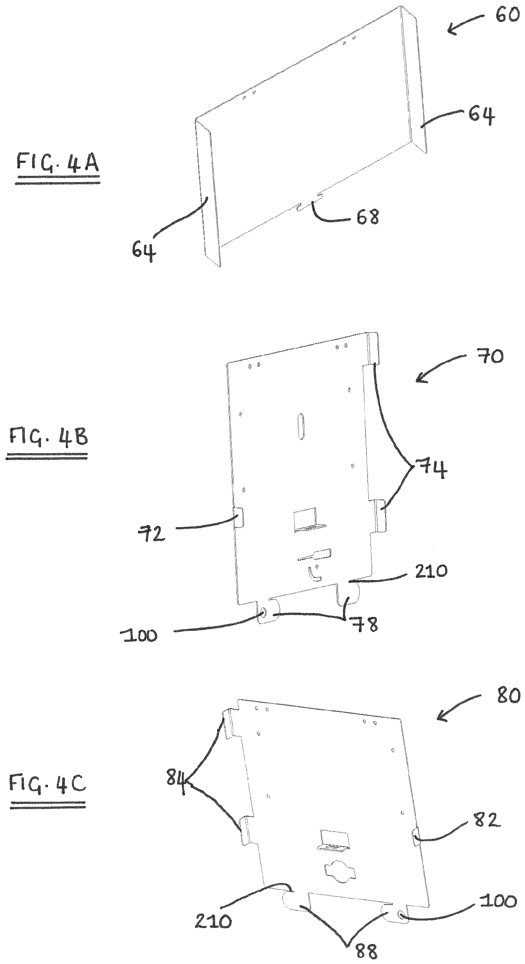

As can be seen in figure 4A, the left and right edges of the back panel 60 each comprise at least one flange 64. As can be seen in figure 3, the flanges 64 may provide a stop limiting the rotation of the left and right side panels 70, 80 away from the top portion 50.

As can be seen in figures 4B and 4C, the rear edge of each of the left and the right side panels 70, 80 comprises at least one flange 74, 84. As can be seen in figure 3, the flanges 74, 84 may provide a stop preventing rotation of the back panel 60 towards the top portion 50.

It can be appreciated that the flanges 64 of the back panel 60 support and stabilise the left and the right side panels 70, 80 in the unfolded state. Similarly, the at least one flange 74, 84 of each of the left and the right side panels 70, 80 supports and stabilises the back panel 60 in the unfolded state.

In alternative arrangements of the invention not depicted, the at least one flange 74, 84 provides a stop limiting the rotation of the back panel 60 away from the top portion 50, and the flanges 64 provide a stop preventing rotation of the left and right side panels 70, 80 towards the top portion 50. In such an arrangement, the flanges 64, 74 and 84 also support and stabilise the oven 10 in the unfolded state. Furthermore, in such an arrangement, to move the portable oven 10 from the folded to the unfolded state, the user would first need to rotate the left and right side panels 70, 80 away from the top portion 50 followed by the back panel 60.

After the back panel 60 and the left and right side panels 70, 80 have been unfolded from the top portion 50, they are attached to the base plate 90. As can be seen in figures 4B and 4C, a lower edge of each of the left side and right side panels 70, 80 may comprise at least one projection 78, 88. Similarly, as can be seen in figure 4A, a lower edge of a top of the back panel 60 may comprise at least one projection 68. As depicted in figure 5, the base plate 90 may comprise: a corresponding at least one aperture 96 for receiving the at least one projection 68 of the back panel 60; a corresponding at least one aperture 97 for receiving the at least one projection 78 of the left side panel 70; and a corresponding at least one aperture 98 for receiving the at least one projection 88 of the right side panel therethrough.

In preferred arrangements of the invention, the projections 78 and 88 of the left and right side panels 70, 80 comprise a notch 210. When connecting the back panel 60 and left and right side panels 70, 80 to the base plate 90, the user first inserts the projections 68, 78 and 88 into the respective apertures 96, 97 and 98. The user may then slide the left and right side panels forwards or backwards, depending on the positioning of the notches 210, so that a portion of the base plate 90 is received within the notches 210. Here, 'backwards' is used to mean in the direction of the back panel 60. In the arrangement depicted in figures 4B and 4C, the positioning of the notches 210 allows the user to slide the left and right side panels 70, 80 backwards in the respective apertures 97, 98. It can be appreciated that receipt of a portion of the base plate 90 in the notches 210 acts to secure the left and right side panels 70, 80 to the base plate 90. After the base plate 90 has been received in the notches 210, the user can no longer simply pull the projections 78, 88 out of the apertures 97, 98 in the base plate 90.

In arrangements of the invention wherein the projections 78 and 88 comprise a notch 210, the at least one aperture 96 for receiving the at least one projection 68 should be sized and shaped so as to also allow corresponding forwards or backwards motion of the back panel 60 when the user slides the left and right side panels 70, 80 forwards or backwards. In preferred arrangements, the at least one aperture 96 and the at least one projection 68 are sized and shaped so as to also secure the back panel 60 to the base plate 90 upon forward or backward motion of the at least one projection 68 in the at least one aperture 96. For example, the at least one projection 68 may be shaped as in figure 4A and the at least one aperture 96 may be shaped as in figure 5. In such an arrangement, when the at least one projection 68 is slid backwards in the at least one aperture 96, the back panel 60 is secured to the base plate 90: the wider part of the at least one projection 68 cannot pass through the narrower section of the at least one aperture 96.

In especially preferred arrangements of the invention, at least one projection 78 and at least one projection 88 comprises a pin aperture 100. Corresponding pin apertures 110 are located in the left and right sides of the base plate 90. These corresponding pin apertures 110 align with the pin apertures 100 in the projections 78, 88 when the oven 10 is in the unfolded state. In such arrangements of the invention, the oven 10 further comprises a plurality of pins 130. The pins 130 lock the oven in the unfolded state. Once the projections 78, 88 have been received in the apertures 97, 98, the user inserts a pin 130 into each pin aperture 110 in the base plate 90. Each pin 130 is also received in an aligned pin aperture 100 from the projections 78, 88. After the pins 130 have been inserted into the pin apertures 100, 110, the left and right side panels 70, 80 cannot be detached from the base plate 90 without the user removing the pins 130 from the pin apertures 100, 110.

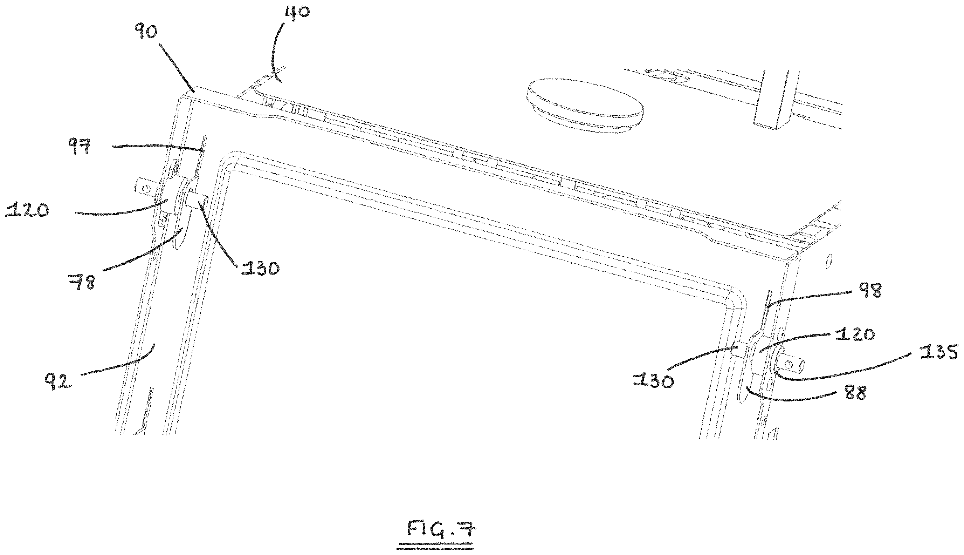

Figure 7 depicts a preferred arrangement of the invention. Figure 7 shows the underside 92 of a base plate 90 when the projections 68, 78 and 98 have been, respectively, inserted into the apertures 96, 97 and 98 of the base plate 90. Adjacent each pin aperture 110 and attached to an inner surface of the base plate 90 is a sleeve 120 holding a magnet. In the depicted arrangement, the magnets each comprise a pin aperture. The pin aperture of each magnet aligns with the adjacent pin aperture 110 in the base plate 90. In such an arrangement, the pins 130 are magnetic and each pin is inserted through: a pin aperture 110 in the base plate 90; an aligned pin aperture in a magnet; and an aligned pin aperture 100 in a projection, in the unfolded state. It can be appreciated that the magnets prevent the pins 130 from becoming dislodged from the pin apertures 100, 110 and provide a stronger lock between the side panels 70, 80 and the base plate 90.

In alternative arrangements of the invention, each magnet does not comprise a pin aperture and the sleeves 130 simply hold magnets adjacent to the pin apertures 110.

In some arrangements of the invention, each pin 130 comprises a magnet.

Many means of attachment of the sleeves 120 to the inner surface of the base plate 90 are possible. In the figures, the sleeves 120 are depicted as being riveted to the inner surface of the base plate 90. However, welding, screwing and other types of fastening are possible.

Each pin 130 may comprise a collar 135. The collar 135 acts as a stop preventing further insertion of the pin 130 through the pin aperture 110 in the unfolded state. In other words, the collar 135 limits the insertion depth of the pin 130. The collar 135 prevents the pin 130 from simply passing through the pin aperture 110 and ensures that the pin 130 is retained within the pin aperture 110 in the unfolded state.

When used in this specification and claims, the terms "comprises" and "comprising" and variations thereof mean that the specified features, steps or integers are included. The terms are not to be interpreted to exclude the presence of other features, steps or components.

Although certain example embodiments of the invention have been described, the scope of the present invention is defined by the appended claims.

## Claims

1. A portable oven (10) comprising an upper and a lower point of attachment (20, 30) for a gas burner (15),
wherein the portable oven is foldable such that the portable oven can be moved between a folded state and an unfolded state,
wherein the portable oven comprises:
a top portion (50);
a base plate (90);
a left and a right side panel (70, 80); and
a back panel (60),
wherein:
the back panel comprises at least one flange (64) on each of a left edge and a right edge thereof;
the left and the right side panels each comprise at least one flange (74, 84) on a rear edge thereof;
the flanges of the back panel support and stabilise the left and the right side panels in the unfolded state; and
the at least one flange of each of the left and the right side panels supports and stabilises the back panel in the unfolded state,
wherein the portable oven is **characterized in that**:
the left and right side panels and the back panel are rotatably attached to the top portion;
the base plate is attachable to and detachable from the back panel and the left and right side panels;
the portable oven is movable from the unfolded state to the folded state via detachment of the base plate from the back panel and the left and right side panels, and rotation of the back panel and the left and right side panels towards the top portion.

2. The portable oven of claim 1, wherein an underside (92) of the base plate (90) is configured to receive the top portion (50), the back panel (60), and the left and right side panels (70, 80) therein in the folded state.

3. The portable oven of claim 1 or claim 2, wherein:
the back panel (60) comprises at least one projection (68) on a lower edge thereof;
each of the left and the right side panels (70, 80) comprises at least one projection (78, 88) on a lower edge thereof; and
the base plate (90) comprises corresponding apertures (96, 97, 98) in a top thereof for receiving the at least one projection of the back panel, the at least one projection of the left side panel, and the at least one projection of the right side panel therethrough.

4. The portable oven of claim 3, wherein each at least one projection (78) of the left side panel (70) and each at least one projection (88) of the right side panel (80) comprises a notch (210) for receiving a portion of the base plate (90) therein.

5. The portable oven of claim 3 or claim 4, wherein:
at least one projection (78) of the left side panel (70) and at least one projection (88) of the right side panel (80) comprises a pin aperture (100) therethrough;
the base plate (90) comprises corresponding pin apertures (110) in a side thereof;
in the unfolded state, each pin aperture of the left and right side panels aligns with one of the pin apertures in the base plate;
the portable oven further comprises a plurality of pins (130); and
in the unfolded state, each pin aperture in the base plate and aligned pin aperture of the side panels receives one of the plurality of pins such that the left and right side panels are locked to the base plate.

6. The portable oven of claim 5, wherein:
the base plate (90) comprises a sleeve (120) holding a magnet adjacent each pin aperture (110) in the base plate, each sleeve being attached to an inner surface of the base plate; and
each pin (130) is magnetic.

7. The portable oven of claim 6, wherein:
each magnet comprises a pin aperture therethrough, the pin aperture of each magnet being aligned with the adjacent pin aperture (110) of the base plate (90); and
in the unfolded state, each pin aperture in the base plate, aligned pin aperture in the adjacent magnet, and aligned pin aperture (100) in the side panels (70, 80) receives one of the plurality of pins (130) such that the left and right side panels are locked to the base plate.

8. The portable oven of any of claims 5 to 7, wherein each pin (130) comprises a collar (135).

9. The portable oven of any preceding claim, wherein the top portion (50) comprises a detachable top plate (54).

## Patentansprüche

1. Tragbarer Ofen (10), umfassend einen oberen und einen unteren Befestigungspunkt (20, 30) für einen Gasbrenner (15),
wobei der tragbare Ofen zusammenklappbar ist, so dass der tragbare Ofen zwischen einem zusammengeklappten Zustand und einem aufgeklappten Zustand bewegt werden kann,
wobei der tragbare Ofen umfasst:
einen Oberteil (50);
eine Bodenplatte (90);
eine linke und eine rechte Seitenwand (70, 80); und
eine Rückwand (60),
wobei:
die Rückwand jeweils an einem linken und einem rechten Rand davon mindestens einen Flansch (64) umfasst;
die linke und die rechte Seitenwand jeweils mindestens einen Flansch (74, 84) an einem hinteren Rand davon umfassen;
die Flansche der Rückwand die linke und die rechte Seitenwand im aufgeklappten Zustand stützen und stabilisieren; und
der mindestens eine Flansch von jeweils der linken und der rechten Seitenwand die Rückwand im aufgeklappten Zustand stützt und stabilisiert,
wobei der tragbare Ofen **dadurch gekennzeichnet ist, dass**:
die linke und die rechte Seitenwand und die Rückwand drehbar an dem Oberteil befestigt sind;
die Bodenplatte an der Rückwand und der linken und rechten Seitenwand befestigt und von diesen abgelöst werden kann;
der tragbare Ofen durch Lösen der Bodenplatte von der Rückwand und der linken und rechten Seitenwand und durch Drehen der Rückwand und der linken und rechten Seitenwand in Richtung auf den Oberteil aus dem aufgeklappten Zustand in den zusammengeklappten Zustand bewegt werden kann.

2. Tragbarer Ofen nach Anspruch 1, wobei eine Unterseite (92) der Bodenplatte (90) so gestaltet ist, dass sie darin den Oberteil (50), die Rückwand (60) und die linke und rechte Seitenwand (70, 80) im zusammengeklappten Zustand aufnimmt.

3. Tragbarer Ofen nach Anspruch 1 oder 2, wobei:
die Rückwand (60) an einem unteren Rand davon mindestens einen Vorsprung (68) umfasst;
die linke und die rechte Seitenwand (70, 80) jeweils an einem unteren Rand davon mindestens einen Vorsprung (78, 88) umfassen; und
die Bodenplatte (90) in einer Oberseite davon entsprechende Öffnungen (96, 97, 98) umfasst, um durch diese hindurch den mindestens einen Vorsprung der Rückwand, den mindestens einen Vorsprung der linken Seitenwand und den mindestens einen Vorsprung der rechten Seitenwand aufzunehmen.

4. Tragbarer Ofen nach Anspruch 3, wobei jeder mindestens eine Vorsprung (78) der linken Seitenwand (70) und jeder mindestens eine Vorsprung (88) der rechten Seitenwand (80) eine Einkerbung (210) zum Aufnehmen eines Teils der Bodenplatte (90) darin umfasst.

5. Tragbarer Ofen nach Anspruch 3 oder 4, wobei:
mindestens ein Vorsprung (78) der linken Seitenwand (70) und mindestens ein Vorsprung (88) der rechten Seitenwand (80) eine dadurch hindurchgehende Stiftöffnung (100) umfasst;
die Bodenplatte (90) in einer Seite davon entsprechende Stiftöffnungen (110) umfasst;
im aufgeklappten Zustand jede Stiftöffnung der linken und rechten Seitenwand mit einer der Stiftöffnungen in der Bodenplatte fluchtet;
der tragbare Ofen ferner eine Mehrzahl von Stiften (130) umfasst; und
im aufgeklappten Zustand jede Stiftöffnung in der Bodenplatte und fluchtende Stiftöffnung der Seitenwände einen der Mehrzahl von Stiften so aufnimmt, dass die linke und rechte Seitenwand mit der Bodenplatte verriegelt sind.

6. Tragbarer Ofen nach Anspruch 5, wobei:
die Bodenplatte (90) eine Hülse (120) umfasst, die benachbart zu jeder Stiftöffnung einen Magneten (110) in der Bodenplatte hält, wobei jede Hülse an einer Innenfläche der Bodenplatte befestigt ist; und
jeder Stift (130) magnetisch ist.

7. Tragbarer Ofen nach Anspruch 6, wobei:
jeder Magnet eine Stiftöffnung durch ihn hindurch umfasst, wobei die Stiftöffnung jedes Magneten mit der benachbarten Stiftöffnung (110) der Bodenplatte (90) fluchtet; und
im aufgeklappten Zustand jede Stiftöffnung in der Bodenplatte, die fluchtende Stiftöffnung im benachbarten Magneten und fluchtende Stiftöffnung (100) in den Seitenwänden (70, 80) einen der Mehrzahl von Stiften (130) aufnimmt, so dass die linke und rechte Seitenwand mit der Bodenplatte verriegelt sind.

8. Tragbarer Ofen nach einem der Ansprüche 5 bis 7, wobei jeder Stift (130) einen Bund (135) umfasst.

9. Tragbarer Backofen nach einem der vorhergehenden Ansprüche, wobei der Oberteil (50) eine ablösbare Oberplatte (54) umfasst.

## Revendications

1. Four portable (10) comprenant des points de fixation (20, 30) supérieur et inférieur pour un brûleur à gaz (15),
le four portable étant pliable de sorte que le four portable peut être déplacé entre un état plié et un état déplié,
le four portable comprenant :
une partie supérieure (50) ;
une plaque de base (90) ;
des panneaux latéraux (70, 80) gauche et droit ; et
un panneau arrière (60),
dans lequel :
le panneau arrière comprend au moins une bride (64) sur chacun d'un bord gauche et d'un bord droit de celui-ci ;
les panneaux latéraux gauche et droit comprennent chacun au moins une bride (47, 84) sur un bord arrière de ceux-ci ;
les brides du panneau arrière supportent et stabilisent les panneaux latéraux gauche et droit dans l'état déplié ; et
l'au moins une bride sur chacun des panneaux latéraux gauche et droit supporte et stabilise le panneau arrière dans l'état déplié,
le four portable étant **caractérisé en ce que** :
les panneaux latéraux gauche et droit et le panneau arrière sont fixés de manière rotative à la partie supérieure,
la plaque de base peut être fixée aux et détachée du panneau arrière et des panneaux latéraux gauche et droit ;
le four portable pouvant être déplacé de l'état déplié à l'état plié par détachement de la plaque de base du panneau arrière et des panneaux latéraux gauche et droit, et rotation du panneau arrière et des panneaux latéraux gauche et droit vers la partie supérieure.

2. Four portable selon la revendication 1, dans lequel une face inférieure (92) de la plaque de base (90) est configurée pour y recevoir la partie supérieure (50), le panneau arrière (60) et les panneaux latéraux (70, 80) gauche et droit dans l'état plié.

3. Four portable selon la revendication 1 ou la revendication 2, dans lequel :
le panneau arrière (60) comprend au moins une saillie (68) sur un bord inférieur de celui-ci ;
chacun des panneaux latéraux (70, 80) gauche et droit comprend au moins une saillie (47, 88) sur un bord inférieur de ceux-ci ; et
la plaque de base (90) comprend des ouvertures (96, 97, 98) correspondantes dans une partie supérieure de celle-ci pour recevoir, à travers celles-ci, l'au moins une saillie du panneau arrière, l'au moins une saillie du panneau latéral gauche et l'au moins une saillie du panneau latéral droit.

4. Four portable selon la revendication 3, dans lequel chaque au moins une saillie (78) du panneau latéral (70) gauche et chaque au moins une saillie (88) du panneau latéral (80) droit comprennent une encoche (210) pour y recevoir une partie de la plaque de base (90).

5. Four portable selon la revendication 3 ou la revendication 4, dans lequel :
au moins une saillie (78) du panneau latéral (70) gauche et au moins une saillie (88) du panneau latéral (80) droit comprennent une ouverture pour broche (100) à travers elles ;
la plaque de base (90) comprend des ouvertures pour broche (110) correspondantes sur un côté de celle-ci ;
dans l'état déplié, chaque ouverture pour broche des panneaux latéraux gauche et droit s'aligne avec l'une des ouvertures pour broche dans la plaque de base ;
le four portable comprenant en outre une pluralité de broches (130) ; et
dans l'état déplié, chacune de l'ouverture pour broche dans la plaque de base et de l'ouverture pour broche alignée des panneaux latéraux reçoit l'une de la pluralité de broches de sorte que les panneaux latéraux gauche et droit sont verrouillés sur la plaque de base.

6. Four portable selon la revendication 5, dans lequel :
la plaque de base (90) comprend un manchon (120) maintenant un aimant adjacent à chaque ouverture pour broche (110) dans la plaque de base, chaque manchon étant fixé à une surface interne de la plaque de base ; et
chaque broche (130) est magnétique.

7. Four portable selon la revendication 6, dans lequel :
chaque aimant comprend une ouverture pour broche à travers celui-ci, l'ouverture pour broche de chaque aimant étant alignée avec l'ouverture pour broche (110) adjacente de la plaque de base (90) ; et
dans l'état déplié, chacune de l'ouverture pour broche dans la plaque de base, de l'ouverture pour broche alignée dans l'aimant adjacent et de l'ouverture pour broche (100) alignée dans les panneaux latéraux (70, 80) reçoit l'une de la pluralité de broches (130) de sorte que les panneaux latéraux gauche et droit sont verrouillés sur la plaque de base.

8. Four portable selon l'une quelconque des revendications 5 à 7, dans lequel chaque broche (130) comprend un collier (135).

9. Four portable selon une quelconque revendication précédente, dans lequel la partie supérieure (50) comprend une plaque supérieure (54) amovible.
